# EUROPEAN PATENT APPLICATION

(11) **EP 4 239 089 A1**
(43) Date of publication of application: **06.09.2023**
(21) Application number: 22818167.3
(22) Date of filing: 26.01.2022
(51) Int. Cl.: C22B 26/12, C22B 21/00, C22B 3/32

(54) **METHOD FOR SELECTIVELY LEACHING LITHIUM AND ALUMINUM FROM MIXED CARBONATE PRECIPITATE**

(30) Priority: 19.01.2022 KR 20220007930
(71) Applicant: ECOPRO MATERIALS, CO., LTD., Pohang-si, Gyeongsangbuk-do 37948 (KR)
(72) Inventor: KIM, Dong Hee, Pohang-si, Gyeongsangbuk-do 37562 (KR); KIM, Woo Jin, Pohang-si, Gyeongsangbuk-do 37581 (KR); SON, Se Il, Pohang-si, Gyeongsangbuk-do 37596 (KR)
(74) Representative: Beck & Rössig European Patent Attorneys
(86) International application number: PCT/KR2022/001404
(87) International publication number: WO 2023/140413

(57) **Abstract**

The present invention relates to a method of selectively leaching lithium (Li) and aluminum (Al) from a mixed carbonate precipitate (MCP) and, more specifically, to a method of selectively leaching Li and Al from an MCP, by which a high-purity MCP can be prepared through selective leaching of Li and Al contained in an MCP used as a raw material for recovering valuable metals including nickel (Ni), cobalt (Co), and manganese (Mn) .

## Description

### BACKGROUND OF THE INVENTION

### 1. Field of the Invention

The present invention relates to a method of selectively leaching lithium (Li) and aluminum (Al) from a mixed carbonate precipitate (MCP), and more specifically to a selective Li and Al leaching method by which Li and Al contained in a mixed carbonate precipitate (MCP) used as a raw material for recovering valuable metals including nickel (Ni), cobalt (Co), and manganese (Mn) can be selectively leached so that a high-purity MCP can be obtained.

### 2. Description of the Related Art

As the lithium secondary battery industry is positioned as a core technology in various application fields ranging from smartphones, tablet PCs, electric vehicles, energy storage devices and the like, its industrial importance is increasing. Lithium secondary batteries, which are mainly applied to portable electronic devices, are being actively researched and developed as concerns about the global environment and the depletion of fossil fuel heighten. It is expected that the demand for lithium secondary batteries will further increase as the electric vehicle market expands in the future.

Valuable metals used as cathode active materials of these lithium secondary batteries can be recovered through a hydrometallurgical process. As the raw material thereof, a mixed carbonate precipitate (MCP) including nickel, cobalt and manganese, which are compounds prepared through processing of black powder, is used.

Table 1 shows the content of metal elements in the MCP.

**Table 1**

| | Ni | Co | Mn | Cu | Zn | Ca | Mg | Fe | Al | Cr | Na | Li | Mois ture |
|---|---|---|---|---|---|---|---|---|---|---|---|---|---|
| Unit | % | | | ppm | | | | | | | | | % |
| MCP | 17 | 10 | 12 | 24,0 00 | 5 | 1,70 0 | 250 | 300 | 41,0 00 | 10 | 90 | 12,0 00 | 50 |

Referring to Table 1, it can be seen that the raw material of MCP includes not only nickel, cobalt, and manganese, but also various impurities such as aluminum, lithium, etc. As for aluminum among these impurities, as the aluminum content increases, the loss of nickel which is a valuable metal reaches up to 40% due to the coprecipitation of aluminum and aluminum in a nickel recovery process through hydrometallurgy.

In addition, as for lithium, there is no method for selectively removing only lithium in the hydrometallurgical process, and there is a problem of causing ecotoxicity when lithium is discharged into wastewater.

### SUMMARY OF THE INVENTION

The present invention has been devised to address the aforementioned issues, and an objective of the present invention is to provide a method of selectively leaching lithium (Li) and aluminum (Al) from a mixed carbonate precipitate (MCP), allowing simultaneous reduction of the concentrations of Al and Li ions contained in an MCP used as a raw material for recovering valuable metals including nickel (Ni), cobalt (Co), and manganese (Mn).

The objective of the present disclosure is not limited to the objective mentioned above. The objectives of the present disclosure will become more apparent from the following description and will be realized by means and combinations thereof described in the claims.

In order to achieve the above-described objective, the present invention provides a method of selectively leaching Li and Al from an MCP, which includes: a raw material separation step of preparing an MCP as a raw material for recovering valuable metals including Ni, Co, and Mn; a leaching step of adding a leaching agent to the raw material for reaction between the leaching agent and the raw material; and a solid-liquid separation step of separating the reaction products of the leaching step into a precipitate including Ni, Co, and Mn and a leachate including Li and Al. The MCP is MeCO₃, where Me includes Ni, Co, Mn, Al, and Li, and the leaching agent includes oxalic acid.

In a preferred embodiment, the method further includes a cleaning step of washing the precipitate with water to remove Li and Al remaining on the precipitate after the solid-liquid separation step.

In a preferred embodiment, the leaching agent includes the oxalic acid and a leachate, and 60 to 70 parts by weight of the oxalic acid and 200 to 400 parts by weight of the leachate are used relative to 100 parts by weight of the MCP.

In a preferred embodiment, the leaching agent further includes citric acid or maleic acid.

In a preferred embodiment, the reaction is performed at a temperature of 20 °C to 30 °C for 0.5 to 1.5 hours in the leaching step.

According to the method of selectively leaching Li and Al in an MCP according to the present invention, Li and Al are selectively leached from the MCP used as a raw material using a leaching agent containing oxalic acid before a hydrometallurgical process for recovering valuable metals including Ni, Co, and Mn, and thus it is possible to increase process efficiency by preventing the loss of Ni during the hydrometallurgical recovery process for valuable metals including Ni, Co, and Mn and environmental issues can be addressed in advance by preventing the discharge of Li into waste water.

### BRIEF DESCRIPTION OF THE DRAWINGS

FIG. 1 is a process chart for describing a method of selectively leaching Li and Al from an MCP according to the present invention.
FIG. 2 shows results of examining Li and Al removal rates for each example of the method of selectively leaching Li and Al in an MCP according to the present invention.
FIG. 3 is a graph showing a Li removal rate according to the amount of oxalic acid used in the method of selectively leaching Li and Al in an MCP according to the present invention.
FIG. 4 is a graph showing an aluminum removal rate according to the amount of oxalic acid used in the method of selectively leaching Li and Al in an MCP according to the present invention.

### DESCRIPTION OF THE PREFERRED EMBODIMENTS

The terms and words used in the present specification and claims should not be interpreted as being limited to typical meanings or dictionary definitions, but should be interpreted as having meanings and concepts relevant to the technical scope of the present invention based on the rule according to which an inventor can appropriately define the concept of the term to describe the best method he or she knows for carrying out the invention.

Hereinafter, preferred embodiments of the present invention will be described in detail with reference to the attached drawings.

However, the present invention is not limited to the following embodiments, and may be variously modified. The same reference numerals are used throughout the accompanying drawings to designate the same or similar components.

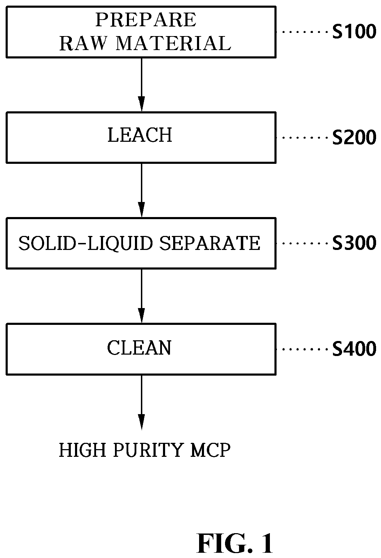

FIG. 1 is a process chart for describing a method of selectively leaching Li and Al from an MCP according to the present invention.

Referring to FIG. 1, a method of selectively leaching Li and Al from an MCP according to the present invention is a method for selectively leaching Li and Al contained in the MCP used as a raw material before a hydrometallurgical process for recovering valuable metals including Ni, Co, and Mn. First, a raw material preparation step (S100) of preparing an MCP as a raw material is performed.

Here, the MCP is used as a raw material for recovering valuable metals including Ni, Co, and Mn, and is MeCOs prepared through processing of black powder (BP), where Me includes Ni, Co, Mn, Al, and Li.

That is, the MCP contains Ni, Co, and Mn as main components and impurities including 2 to 5% of Al, 0.5 to 1.5% of Li and the like. The ingredients are identified in Table 1 above.

Next, a leaching step (S200) of reacting the raw material thus prepared with a leaching agent to selectively leach Li and Al is performed.

In the leaching step, the leaching agent is oxalic acid.

For example, the leaching agent may include the oxalic acid and leachate.

Here, it is preferable that 60 to 70 parts by weight of the oxalic acid and 200 to 400 parts by weight of the leachate are used relative to 100 parts by weight of the MCP.

The reason is that, when less than 60 parts by weight of the oxalic acid and less than 200 parts by weight of the leachate are used, the leaching efficiency of the Li and Al is limited, and when more than 70 parts by weight of the oxalic acid and more than 400 parts by weight of the leachate are used, the leaching rate of Li and Al is increased while the increase in leaching rate is insignificant, and Ni, Co, and Mn, which are valuable metals contained in the MCP, are leached together.

In addition, the leaching agent may further include citric acid or maleic acid.

Further, the reaction may be performed at a temperature of 20 °C to 30 °C for 0.5 hours to 1.5 hours in the leaching step (S200) .

Next, a solid-liquid separation step (S300) of separating the reaction products formed through the leaching step (S200) into a precipitate including Ni, Co, and Mn and a leachate including Li and Al is performed.

That is, the precipitate containing Ni, Co, and Mn separated in the solid phase is used as the raw material of the hydrometallurgical process for the recovery of valuable metals. Separately, the leachate containing Al and Li is separated in the liquid phase and may be reused as the raw material for the recovery of Li or Al.

Thereafter, a cleaning step (S400) of washing the precipitate with water to remove Li and Al remaining on the precipitate may be further performed.

### Examples 1 to 18

A leaching agent was added to a raw material (MCP, that is, MeCOs where Me is Ni, Co, Mn, Al, or Li) including Ni, Co, and Mn to carry out leaching reaction.

Thereafter, the reaction products thus formed were separated into a precipitate containing Ni, Co, and Mn and a leachate containing Li and Al, and then the precipitate was washed with washing water to remove Li and Al remaining on the precipitate.

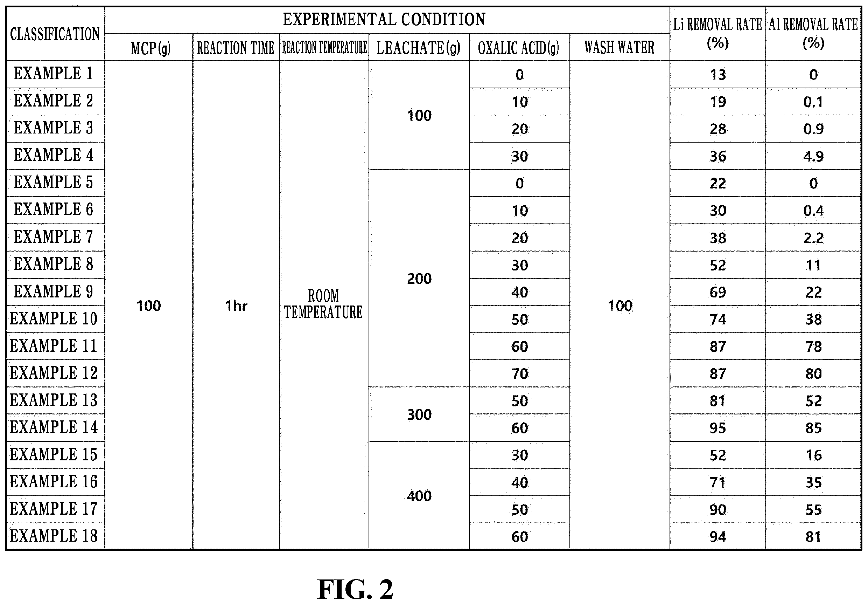

Further, FIG. 2 shows specific experimental conditions of Examples 1 to 18 and Li and Al removal rates for each Example.

As shown in FIG. 2, it can be seen that Example 14 shows the optimal condition in which 300 parts by weight of leachate, 60 parts by weight of oxalic acid, and 100 parts by weight of washing water are used relative to 100 parts by weight of the raw material, and the leaching efficiency of Li and Al increases as the amounts of used leachate and oxalic acid increase.

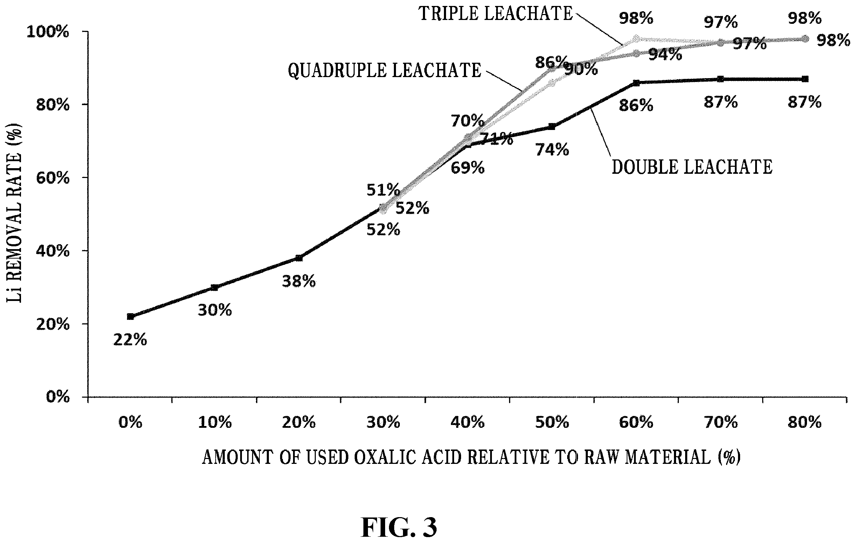

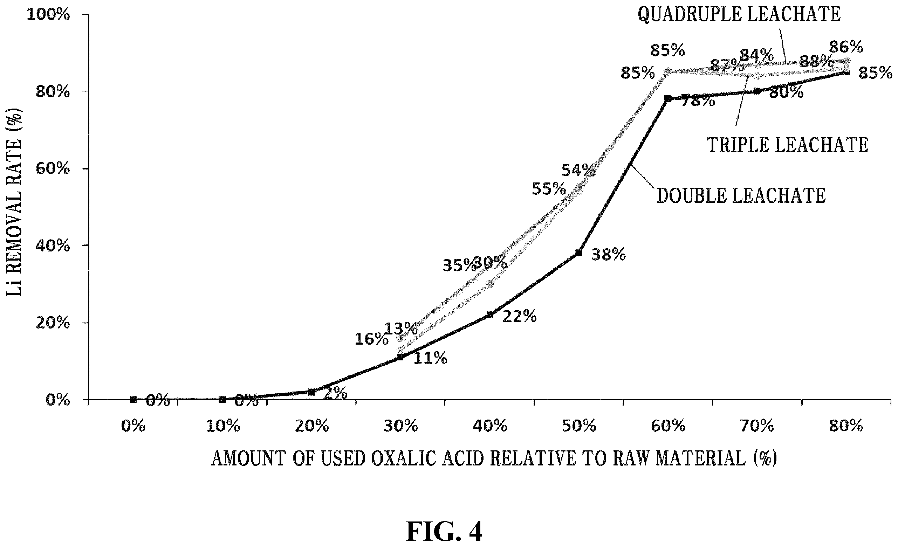

Furthermore, FIGS. 3 and 4 show results of the Li and Al removal rates according to the amount of oxalic acid and leachate used therein, respectively.

Referring to FIG. 3, in terms of the lithium removal rate, it can be seen that the lithium removal rate increases when the amount of used oxalic acid increases, and the lithium removal rate reaches 74% to 98% when 60 to 70 parts by weight of the oxalic acid and 200 to 400 parts by weight of the leachate are used.

Further, referring to FIG. 4, in terms of the aluminum removal rate, it can be seen that the aluminum removal rate increases when the amount of used oxalic acid increases, similar to the lithium removal rate described above. In addition, it can be seen that the aluminum removal rate reaches 78% to 87% when 60 to 70 parts by weight of the oxalic acid and 200 to 400 parts by weight of the leachate are used.

On the other hand, when more than 70 parts by weight of the oxalic acid and more than 400 parts by weight of the leachate are used, the lithium removal rate and the aluminum removal rate slightly increase, but the increase range is insignificant, and Ni, Co, and Mn, which are the valuable metals contained in the MCP as a raw material, are leached together.

Accordingly, it is preferable that 60 to 70 parts by weight of the oxalic acid and 200 to 400 parts by weight of the leachate are used relative to 100 parts by weight of the MCP.

As described above, according to a method of selectively leaching Li and Al from an MCP according to the present invention, the optimal compositions of the MCP used as a raw material and the leaching agent containing oxalic acid and a leachate are used before the hydrometallurgical process for recovering valuable metals including Ni, Co, and Mn, and thus Li and Al contained in the raw material are selectively leached to prepare a high-purity MCP.

Accordingly, the high-purity MCP thus prepared is used as a raw material for the hydrometallurgical recovery process for valuable metals including Ni, Co, and Mn, and co-precipitation of Ni and Al in the hydrometallurgical recovery process can be minimized to prevent the discharge of Li into wastewater, thereby preventing environmental problems in advance.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

### Industrial Applicability

The MCP prepared according to the present invention can be used as a raw material for recovering valuable metals including Ni, Co, and Mn, and the recovered valuable metals can be used as a key raw material in manufacturing of a cathode material for a lithium secondary battery.

## Claims

1. A method of selectively leaching lithium and aluminum from a mixed carbonate precipitate, the method comprising:
a raw material separation step of preparing a mixed carbonate precipitate as a raw material for recovering valuable metals including nickel, cobalt, and manganese;
a leaching step of adding a leaching agent to the raw material for reaction between the leaching agent and the raw material; and
a solid-liquid separation step of separating the reaction products of the leaching step into a precipitate comprising nickel, cobalt, and manganese and a leachate comprising lithium and aluminum;
wherein the mixed carbonate precipitate is MeCO₃ where Me comprises nickel, cobalt, manganese, aluminum, and lithium, and the leaching agent comprises oxalic acid.

2. The method of claim 1, further comprising a cleaning step of washing the precipitate with water to remove lithium and aluminum remaining on the precipitate, the cleaning step being performed after the solid-liquid separation step.

3. The method of claim 1, wherein the leaching agent comprises the oxalic acid and a leachate, wherein the leaching agent comprises 60 to 70 parts by weight of the oxalic acid and 200 to 400 parts by weight of the leachate, relative to 100 parts by weight of the mixed carbonate precipitate.

4. The method of claim 3, wherein the leaching agent further comprises citric acid or maleic acid.

5. The method of claim 1, wherein the reaction is performed at a temperature of 20 °C to 30 °C for 0.5 to 1.5 hours in the leaching step.
